# EUROPEAN PATENT SPECIFICATION

(11) **EP 3 214 139 B1**
(45) Date of publication and mention of the grant of the patent: **19.12.2018**
(21) Application number: 15855070.7
(22) Date of filing: 27.10.2015
(51) Int. Cl.: C09B 29/036, C09B 29/12

(54) **AZO COMPOUND PRODUCTION METHOD**
VERFAHREN ZUR HERSTELLUNG EINER AZOVERBINDUNG
PROCÉDÉ DE PRODUCTION DE COMPOSÉ AZOÏQUE

(30) Priority: 30.10.2014 JP 2014221674
(43) Date of publication of application: 06.09.2017
(73) Proprietor: Fujifilm Corporation, Minato-ku Tokyo 106-8620 (JP)
(72) Inventor: SUN, Guixiang, Hiratsuka-shi Kanagawa 258-8577 (JP)
(74) Representative: Hoffmann Eitle
(86) International application number: PCT/JP2015/080292
(87) International publication number: WO 2016/068151

(56) References cited:
- EP-A1- 2 264 105
- DE-A1- 3 524 295
- JP-A- S54 160 370
- JP-A- 2007 063 520
- JP-A- 2007 217 681
- JP-A- 2009 001 708
- JP-A- 2010 001 455
- JP-A- 2011 252 046
- JP-A- 2014 034 643
- DATABASE WPI Week 201201 Thomson Scientific, London, GB; AN 2011-Q29429 XP002773472, & JP 2011 252046 A (FUJI FILM CO LTD) 15 December 2011 (2011-12-15)

## Description

### BACKGROUND OF THE INVENTION

### 1. Field of the Invention

The present disclosure relates to a method for producing an azo compound.

### 2. Description of the Related Art

In the field of coloring agents, azo dyes and the like having a diazo structure are widely known (see, for example, JP4080947B).

It is desirable that dyes and the like as coloring agents have sharp light absorption characteristics, have high color purity, and have excellent color reproducibility. In regard to such coloring agents, there is also a demand for a technology capable of producing coloring agents for practical purposes with high yield.

For the production of an azo coloring agent, nitrous acid or nitrous acid salts such as sodium nitrite are generally used as diazotizing agents, and a method of using nitrosylsulfuric acid is also known (see, for example, JP2001-335714A). Specifically, it is disclosed that nitrosylsulfuric acid is added to a solution containing a heterocyclic amine, the mixture is subjected to a diazotization reaction to convert the heterocyclic amine to a diazonium, and a 2,6-dipyrazolyltriazine compound is added thereto so as to induce a coupling reaction (see, for example, JP2012-001627A and JP2009-73978A).

Also the authors of EP,A1,2,264,105 propose the use of nitrosylsulfuric acid as diazotizing agent by preparing similar monoazo pigments.

### SUMMARY OF THE INVENTION

In regard to the production of an azo coloring agent that is produced by reacting a phenol compound with a diazonium compound of 1-substituted-5-aminopyrazole, it has been conventionally considered as a common practice to use nitrous acid or a nitrous acid salt as a diazotizing agent, as disclosed in JP4080947B. However, when it is attempted to obtain a diazonium in the presence of a nitrous acid salt or the like, effervescence caused by generation of NOₓ occurs noticeably, and the product tends to be easily colored in brown. Also, if a large amount of a solvent is not used, fluidity cannot be retained, and the product yield may become poor. Furthermore, there are no findings related to any technology by which effervescence associated with the NOₓ generated in the production process for an azo coloring agent is suppressed by the technologies described in JP2001-335714A, JP2012-001627A, and JP2009-73978A, coloration is prevented, and fluidity can be secured. As such, it is the current situation that there has not been established any technology capable of enhancing the color purity and the product yield to a level higher than or equal to the conventional level.

The present disclosure was achieved in view of the circumstances described above, and it is an object of the disclosure to provide a method for producing an azo compound, by which an azo compound having satisfactory color purity is produced with high yield.

Specific means for achieving the problems described above include the following embodiments.
<1> A method for producing an azo compound, the method comprising: subjecting an organic amine compound represented by the following Formula (2) or a salt thereof to a diazotization reaction in the presence of nitrosylsulfuric acid, and thereby producing a diazonium salt (diazotization reaction step); and reacting a compound represented by the following Formula (1) with the diazonium salt, and thereby producing an azo compound represented by the following Formula (3) (azo compound production step). 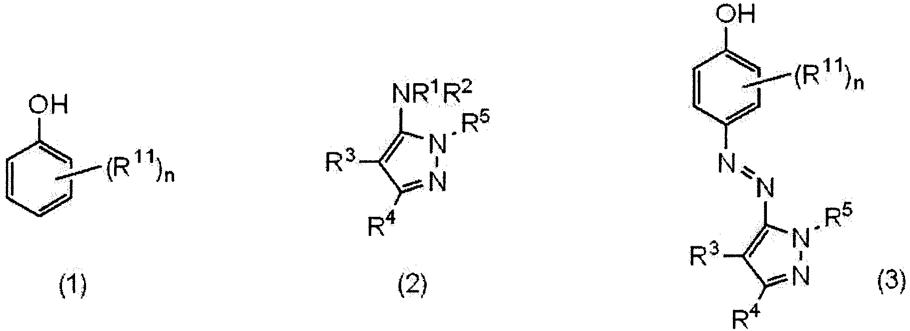
   In Formulae (1) to (3), R¹¹ represents a halogen atom, an alkyl group, or an alkoxy group; R¹ and R² each represent a hydrogen atom; R³ and R⁴ each independently represent a hydrogen atom, an alkyl group, an alkenyl group, an alkynyl group, an aromatic group, a heterocyclic group, a halogen atom, or a group represented by the following Formula (4); and R⁵ represents a hydrogen atom, an alkyl group, an alkenyl group, an alkynyl group, an aromatic group, or a heterocyclic group.
   n represents an integer from 0 to 4.
   In the following Formula (4), X represents an oxygen atom or a sulfur atom; and R⁸ represents a hydrogen atom, an alkyl group, an alkenyl group, an alkynyl group, an aromatic group, or a heterocyclic group. The symbol * represents a position of bonding.
   *-X-R⁸ (4)
<2> The method for producing an azo compound according to <1>, the method further comprising: subjecting the organic amine compound represented by Formula (2) and a compound represented by the following Formula (5) to a neutralization reaction, and thereby producing an organic amine salt (organic amine salt production step), wherein, in the diazotization reaction step, an organic amine salt is subjected to a diazotization reaction to thereby produce a diazonium salt; and in the azo compound production step, the compound represented by Formula (1) is reacted with the diazonium salt produced from the organic amine salt.
   In Formula (5), R⁶ and R⁷ each independently represent a hydrogen atom, an alkyl group, an aromatic group, a heterocyclic group, or a hydroxyl group. 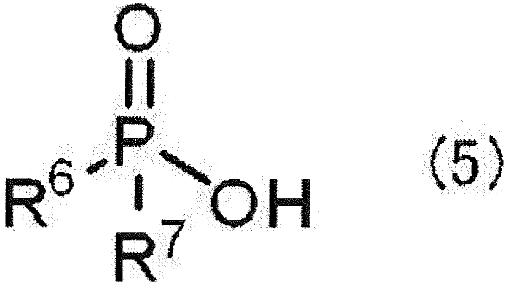
<3> The method for producing an azo compound according to <2>, wherein in the organic amine salt production step, a compound represented by Formula (5) is added to an amine solution containing an organic amine compound represented by Formula (2), and thereby the organic amine compound represented by Formula (2) and the compound represented by Formula (5) are subjected to a neutralization reaction.
<4> The method for producing an azo compound according to <2> or <3>, wherein the compound represented by Formula (5) is phosphoric acid.
<5> The method for producing an azo compound according to any one of <1> to <4>, wherein R¹¹ represents a halogen atom or n is 0; R¹ and R² each represent a hydrogen atom; R³ and R⁴ each independently represent a hydrogen atom or an alkyl group; and R⁵ represents an alkyl group.
<6> The method for producing an azo compound according to any one of <1> to <5>, wherein R¹¹ represents a halogen atom or n is 0; R¹, R², R³, and R⁴ each represent a hydrogen atom; and R⁵ represents an alkyl group.

According to the present disclosure, there is provided a method for producing an azo compound, by which an azo compound having satisfactory color purity is produced with high yield.

### DESCRIPTION OF THE PREFERRED EMBODIMENTS

Hereinafter, embodiments of the method for producing an azo compound of the invention will be described in detail.

The method for producing an azo compound according to an embodiment of the invention includes at least the following diazotization reaction step (A) and azo compound production step (B):
(A) subjecting an organic amine compound represented by Formula (2) or a salt thereof to a diazotization reaction in the presence of nitrosylsulfuric acid, and thereby producing a diazonium salt; and
(B) reacting a compound represented by Formula (1) with the diazonium salt, and thereby producing an azo compound represented by Formula (3).

Furthermore, the method for producing an azo compound according to an embodiment of the invention can be configured to further include other steps such as a step of producing a salt (organic amine salt) of the organic amine compound represented by Formula (2) (organic amine salt production step), in addition to the diazotization reaction step (A) and azo compound production step (B).

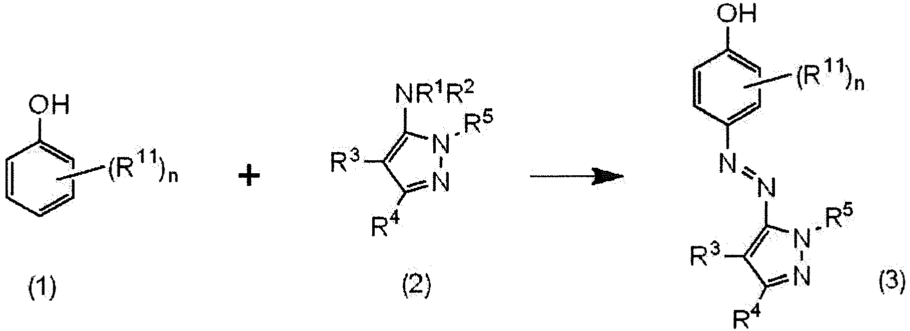

Conventionally, methods of subjecting an organic amine to the action of nitrous acid, a nitrous acid salt, or a nitrous acid ester (hereinafter, referred to as nitrous acid salt or the like) have been widely utilized for the production of diazonium salts, and the production step for an azo compound that is carried out as a next step has been conducted such that an azo compound is produced by reacting a diazonium salt obtained by using a nitrous acid salt or the like as a diazotizing agent, with a hydroxyl group-containing aromatic compound. However, in a case in which conversion to diazonium is achieved by using a nitrous acid salt or the like as a diazotizing agent, NOₓ is generated and brings about a noticeable effervescence phenomenon, and the product may be colored in brown. Furthermore, in a case in which an azo compound is subsequently produced using a diazonium salt obtained from a nitrous acid salt or the like, fluidity of the reaction system is markedly reduced, consequently the yield is decreased, and the color purity of the azo compound thus produced is also markedly deteriorated.

In view of the circumstances as described above, according to the present disclosure, when a diazonium production reaction is performed using nitrosylsulfuric acid as a diazotizing agent, and a diazonium salt obtained using nitrosylsulfuric acid is reacted with a particular hydroxyl group-containing aromatic compound, an azo compound represented by Formula (3) is produced.

It is speculated that an effervescence phenomenon that occurs along with generation of NOₓ is prevented at the time of the diazonium production reaction, and in the production step for an azo compound that is conducted as a next step, fluidity of the reaction system is maintained at a satisfactory level, so that an azo compound having excellent color purity can be produced with high yield. However, the embodiment of the invention is not intended to be limited by this speculation.

### - (A) Diazotization reaction step -

In the diazotization reaction step according to an embodiment of the invention, an organic amine compound represented by Formula (2) or a salt thereof is subjected to a diazotization reaction in the presence of nitrosylsulfuric acid, and thus a diazonium salt is produced.

According to an embodiment of the invention, as a method of producing a diazonium salt from an organic amine compound or a salt thereof, an organic amine compound or a salt thereof is subjected to the action of nitrosylsulfuric acid as a diazotizing agent. As described above, when a diazonium salt obtained using nitrosylsulfuric acid as a diazotizing agent is used, an azo coloring agent having excellent color purity can be produced with high yield.

Here, the organic amine compound represented by Formula (2) or a salt thereof will be explained. The organic amine compound represented by Formula (2) is a compound having an aminopyrazole skeleton, and tautomers are also included therein.

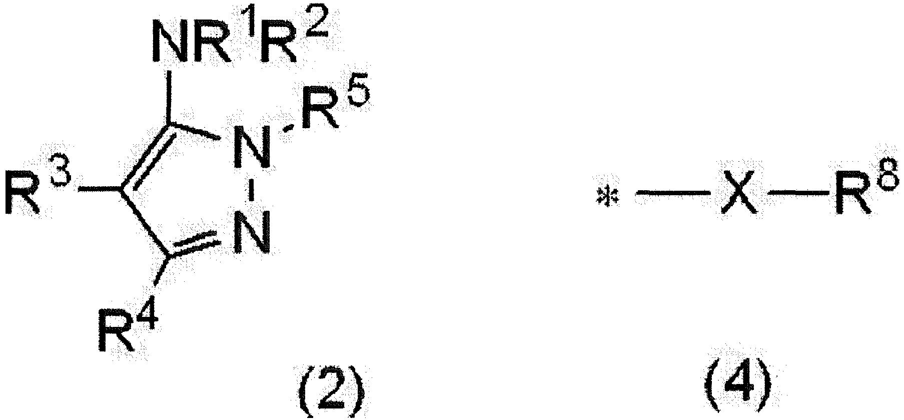

In Formula (2), R¹ and R² each represent a hydrogen atom; and R³ and R⁴ each independently represent a hydrogen atom, an alkyl group, an alkenyl group, an alkynyl group, an aromatic group, a heterocyclic group, a halogen atom, or a group represented by Formula (4). R⁵ represents a hydrogen atom, an alkyl group, an alkenyl group, an alkynyl group, an aromatic group, or a heterocyclic group.

Furthermore, in Formula (4), X represents an oxygen atom or a sulfur atom; and R⁸ represents a hydrogen atom, an alkyl group, an alkenyl group, an alkynyl group, an aromatic group, or a heterocyclic group. The symbol * represents a position of bonding.

The alkyl group for R⁵ may be any one of a linear alkyl group, a branched alkyl group, and a cyclic alkyl group (cycloalkyl group).

Examples of the alkyl group for R⁵ include a methyl group, an ethyl group, a propyl group, an isopropyl group, a butyl group, an isobutyl group, a t-butyl group, a hexyl group, a 2-ethylhexyl group, a dodecyl group, a cyclopropyl group, a cyclopentyl group, a cyclohexyl group, and a 1-adamantyl group. Among them, the alkyl group for R⁵ is preferably an alkyl group having 1 to 12 carbon atoms, more preferably an alkyl group having 1 to 6 carbon atoms, even more preferably an alkyl group having 1 to 3 carbon atoms, and particularly preferably a methyl group.

The alkenyl group for R⁵ may be any one of a linear alkenyl group, a branched alkenyl group, and a cyclic alkenyl group.

Examples of the alkenyl group for R⁵ include a vinyl group, an allyl group, a 3-butenyl group, a 2-methyl-2-butenyl group, a 4-pentenyl group, a 3-pentenyl group, a 3-methyl-3-pentenyl group, a 5-hexenyl group, a 4-hexenyl group, a 3-hexenyl group, a 2-hexenyl group, a cyclopentenyl group, and a cyclohexenyl group. The alkenyl group for R⁵ is preferably an alkenyl group having 2 to 12 carbon atoms, more preferably an alkenyl group having 2 to 6 carbon atoms, even more preferably an alkenyl group having 2 or 3 carbon atoms, and particularly preferably a vinyl group.

The alkynyl group for R⁵ may be any one of a linear alkynyl group, a branched alkynyl group, and a cyclic alkynyl group.

Examples of the alkynyl group for R⁵ include an ethynyl group, a 1-propynyl group, a 2-propynyl group, a 1 -butynyl group, a 2-butynyl group, a 3-butynyl group, a 2-methyl-2-propynyl group, and a 3-methyl-1-butynyl group. The alkynyl group for R⁵ is preferably an alkynyl group having 2 to 12 carbon atoms, more preferably an alkynyl group having 2 to 6 carbon atoms, even more preferably an alkynyl group having 2 or 3 carbon atoms, and particularly preferably an ethynyl group.

Examples of the aromatic group for R⁵ include a phenyl group, a naphthyl group, and a biphenyl group. The aromatic group for R⁵ is preferably an aromatic group having 6 to 12 carbon atoms, and particularly preferably a phenyl group.

The heterocyclic group for R⁵ may be a cyclic group containing at least one heteroatom selected from the group consisting of an oxygen atom, a sulfur atom, and a nitrogen atom, and more specific examples thereof include a furyl group, a thienyl group, a pyrrolyl group, a pyrazolyl group, a thiazolyl group, an oxazolyl group, an imidazolyl group, a pyridyl group, a pyrazyl group, a pyrimidinyl group, a pyridazinyl group, a pyrrolidinyl group, an imidazolidinyl group, a pyrazolidinyl group, a piperidinyl group, a benzoxazolyl group, a benzothiazolyl group, and a benzotriazolyl group. Among them, the heterocyclic group for R⁵ is preferably a heterocyclic group having 3 to 12 carbon atoms, and more preferably a heterocyclic group having 3 to 6 carbon atoms.

The alkyl group, alkenyl group, alkynyl group, aromatic group, and heterocyclic group for R⁵ may be respectively substituted with a substituent other than an amino group (for example, a halogen atom; and preferably, a fluorine atom or a chlorine atom).

The alkyl group for R³ and R⁴ has the same meaning as the alkyl group for R⁵, and a preferred range thereof is also the same.

The alkenyl group for R³ and R⁴ has the same meaning as the alkenyl group for R⁵, and a preferred range thereof is also the same.

The alkynyl group for R³ and R⁴ has the same meaning as the alkynyl group for R⁵, and a preferred range thereof is also the same.

The aromatic group for R³ and R⁴ has the same meaning as the aromatic group for R⁵, and a preferred range thereof is also the same.

The heterocyclic group for R³ and R⁴ has the same meaning as the heterocyclic group for R⁵, and a preferred range thereof is also the same.

Examples of the halogen atom for R³ and R⁴ include a fluorine atom, a chlorine atom, a bromine atom, and an iodine atom. The halogen atom for R³ and R⁴ is preferably a fluorine atom, a chlorine atom, or a bromine atom, and a fluorine atom or a chlorine atom is more preferred.

The alkyl group for R⁸ has the same meaning as the alkyl group for R⁵, and a preferred range thereof is also the same.

The alkenyl group for R⁸ has the same meaning as the alkenyl group for R⁵, and a preferred range thereof is also the same.

The alkynyl group for R⁸ has the same meaning as the alkynyl group for R⁵, and a preferred range thereof is also the same.

The aromatic group for R⁸ has the same meaning as the aromatic group for R⁵, and a preferred range thereof is also the same.

The heterocyclic group for R⁸ has the same meaning as the heterocyclic group for R⁵, and a preferred range thereof is also the same.

In regard to Formula (2), it is more preferable that R⁵ represents a hydrogen atom or an alkyl group (preferably, an alkyl group having 1 to 12 carbon atoms, more preferably an alkyl group having 1 to 6 carbon atoms, and even more preferably an alkyl group having 1 to 3 carbon atoms), and it is even more preferable that R⁵ represents an alkyl group. Particularly preferably, in Formula (2), R⁵ is an alkyl group having 1 to 3 carbon atoms (most preferably, a methyl group).

In regard to Formula (2), it is more preferable that R³ and R⁴ each independently represent a hydrogen atom or an alkyl group (preferably an alkyl group having 1 to 12 carbon atoms, more preferably an alkyl group having 1 to 6 carbon atoms, and even more preferably an alkyl group having 1 to 3 carbon atoms). Particularly preferably, R³ and R⁴ both represent a hydrogen atom.

Moreover, in regard to Formula (2), it is preferable that R¹, R², R³, and R⁴ each represent a hydrogen atom, and R⁵ represents an alkyl group.

Specific examples of the organic amine compound represented by Formula (2) (Example Compounds (A-1) to (A-6)) are shown below. However, the organic amine compound represented by Formula (2) is not intended to be limited to the following specific examples.

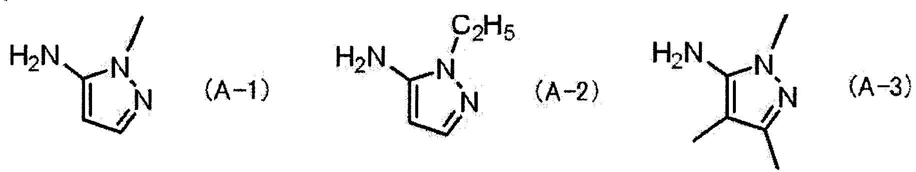

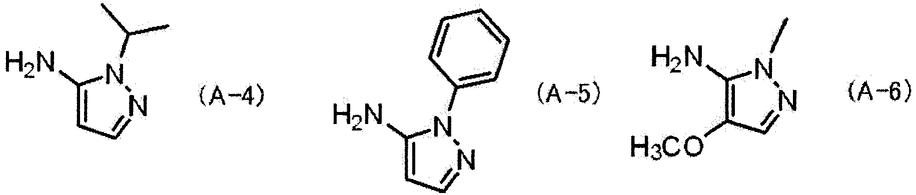

In regard to the diazotization reaction step, the amount of use of nitrosylsulfuric acid is preferably 1.5 times or more, more preferably 2.0 times or more, and more preferably 2.5 times or more, the molar amount of use of the organic amine compound represented by Formula (2) or a salt thereof.

When nitrosylsulfuric acid is used as a diazotizing agent, the amount of the solvent for the reaction system in which the azo compound is subsequently produced via a coupling reaction, can be reduced to a large extent, while maintaining fluidity of the reaction medium, compared to the conventional methods for performing diazotization using a nitrous acid salt or the like. Specifically, the amount of the solvent to be used in the azo compound production step that will be described below can be reduced by about 1/3 to 1/5 of the conventional amount.

The diazotization reaction can be carried out in a reaction medium containing an acid such as sulfuric acid, acetic acid, or hydrochloric acid (acid-containing reaction medium).

The reaction temperature employed in the case of performing the diazotization reaction is preferably in the range of -5°C to 30°C, and more preferably in the range of -5°C to 10°C.

Furthermore, the reaction time for the diazotization reaction is suitably in the range of 0.25 hours to 2.0 hours, and more suitably in the range of 0.5 hours to 2.0 hours.

In the diazotization reaction step according to an embodiment of the invention, a salt of an organic amine compound represented by Formula (2) may also be used for the diazotization reaction. The salt of the organic amine compound according to an embodiment of the invention is preferably an organic amine salt that is produced by subjecting the organic amine compound represented by Formula (2) and a compound represented by the following Formula (5) to a neutralization reaction. In this case, in the diazotization reaction step, an organic amine salt is subjected to a diazotization reaction, and thus a diazonium salt is produced.

### [Organic amine salt production step]

According to an embodiment of the invention, an organic amine salt production step of producing an organic amine salt by subjecting an organic amine compound represented by Formula (2) and a compound represented by Formula (5) to a neutralization reaction may be further provided before the diazotization reaction step. When the organic amine salt production step is provided, an organic amine salt can be easily extracted as crystals, without requiring complicated operations such as concentration and purification.

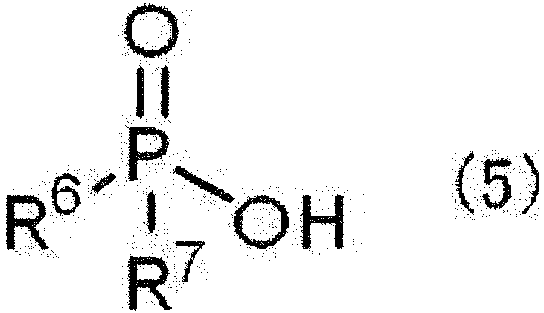

For an organic amine compound having an aminopyrazole skeleton, it is necessary to perform complicated operations such as concentration and purification (column chromatography or the like) when this organic amine compound is produced from a reaction liquid after synthesis, and productivity is likely to be deteriorated. On the contrary, an organic amine salt obtained by subjecting an organic amine compound to a neutralization reaction can be easily produced by precipitation as crystals, despite being a compound (salt) having an aminopyrazole skeleton, without requiring complicated operations (concentration, purification and the like) for the reaction liquid after synthesis. Therefore, an organic amine salt is advantageous from the viewpoint that productivity can be further enhanced.

In regard to Formula (5), R⁶ and R⁷ each independently represent a hydrogen atom, an alkyl group, an aromatic group, a heterocyclic group, or a hydroxyl group.

The alkyl group for R⁶ and R⁷ has the same meaning as the alkyl group for R⁵ in Formula (2), and a preferred range thereof is also the same.

The aromatic group for R⁶ and R⁷ has the same meaning as the aromatic group for R⁵ in Formula (2), and a preferred range thereof is also the same.

The heterocyclic group for R⁶ and R⁷ has the same meaning as the heterocyclic group for R⁵ in Formula (2), and a preferred range thereof is also the same.

It is preferable from the viewpoint of producing an organic amine salt with higher efficiency that R⁶ and R⁷ in Formula (5) each independently represent a hydrogen atom, an alkyl group (preferably an alkyl group having 1 to 12 carbon atoms, more preferably an alkyl group having 1 to 6 carbon atoms, and even more preferably an alkyl group having 1 to 3 carbon atoms), or a hydroxyl group; and a hydrogen atom or a hydroxyl group is more preferred. Particularly preferably, from the viewpoint of producing an organic amine salt with higher efficiency, R⁶ and R⁷ both represent a hydroxyl group. That is, a case in which the compound represented by Formula (5) is phosphoric acid (H₃PO₄) is preferred.

Specific examples of the compound represented by Formula (5) (Example Compounds (B-1) and (B-2)) are shown below. However, the compound represented by Formula (5) is not intended to be limited to the following specific examples.

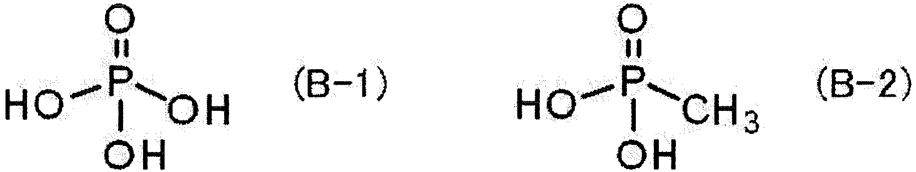

It is speculated that the organic amine salt can be easily precipitated out as crystals because the organic amine salt is a salt produced by an organic amine compound having a particular structure (organic amine compound represented by Formula (2)) and an acid compound having a particular structure (compound represented by Formula (5)). That is, regarding a salt produced by an organic amine compound having a particular structure and an acid other than the acid compound having a particular structure, it is considered difficult to precipitate out the salt as crystals from the reaction liquid after synthesis. Furthermore, the fact that the skeletal structure of the organic amine compound is an aminopyrazole skeleton having only one amino group is also considered as a reason why the organic amine salt can be easily precipitated as crystals. That is, it is speculated to be because, since the skeletal structure of the organic amine compound has only one amino group, a salt (organic amine salt) is easily formed, and the salt thus formed is easily precipitated out as crystals.

Thereby, according to an embodiment of the invention, an azo coloring agent can be produced with a higher yield compared to the case in which a simple substance of the organic amine compound is used as a starting material or a synthesis intermediate.

The structure of the organic amine salt is a structure of a salt including a cation (ammonium ion) obtained when at least one hydrogen atom is added to the organic amine compound represented by Formula (2), and an anion obtained when at least one hydrogen atom is removed from the compound represented by Formula (5).

Here, the position at which a hydrogen atom is added to the organic amine compound represented by Formula (2) is at least one position selected from among the at least three nitrogen atoms (N) existing in Formula (2). The hydrogen atom that is removed from the compound represented by Formula (5) is at least one hydrogen atom that is included in the at least one hydroxyl group existing in Formula (5).

According to the present specification, an organic amine salt may be described such that the organic amine compound represented by Formula (2) and the compound represented by Formula (5) are arranged side by side, with the symbol " · " disposed therebetween. For example, phosphate as one of specific examples of the organic amine salt is described as in the case of the following Example Compound (1).

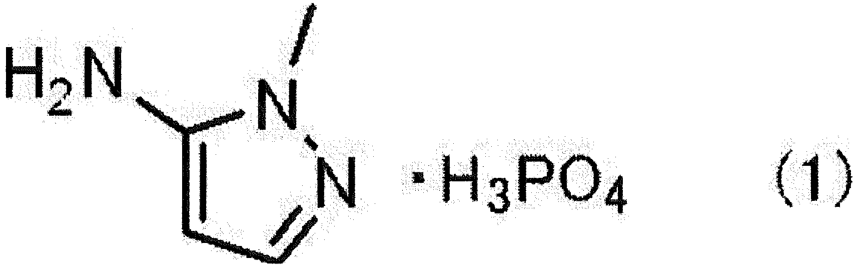

Specific examples of the organic amine salt include salts obtained by arbitrarily combining the above-described specific examples of the amine compound (Example Compounds (A-1) to (A-6)) and the compound represented by Formula (5) (Example Compounds (B-1) and (B-2)).

The Example Compound (1) shown above is a compound including a cation derived from 5-aminopyrazole represented by the following Compound (A-1) and an anion derived from phosphoric acid represented by the following Compound (B-1).

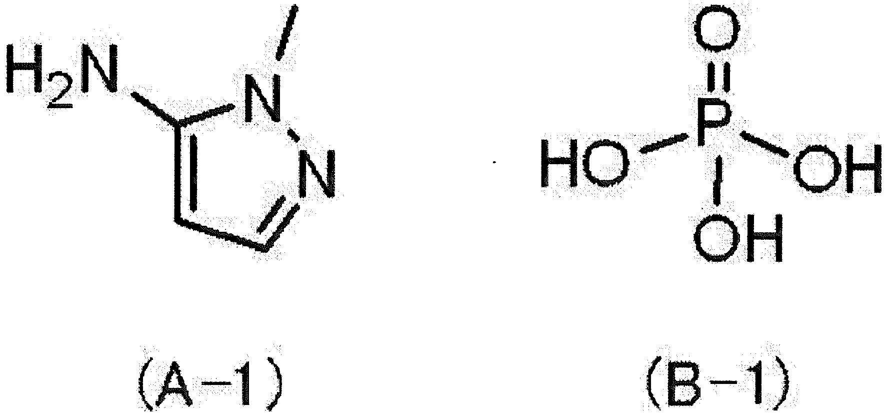

In regard to the organic amine salt, the molar ratio (cation:anion) between the cation derived from the organic amine compound represented by Formula (2) and the anion derived from the compound represented by Formula (5) is preferably 1:3 to 3:1, more preferably 1:2 to 2:1, and particularly preferably 1:1.

Examples of the method for subjecting the organic amine compound represented by Formula (2) and the compound represented by Formula (5) to a neutralization reaction, include a method of adding the compound represented by Formula (5) (for example, an acid) to an amine solution containing the organic amine compound; and a method of adding the organic amine compound to a solution (hereinafter, also referred to as acid solution) containing the compound represented by Formula (5) (for example, an acid).

Adding the compound represented by Formula (5) is not limited to the case of adding the compound represented by Formula (5) (for example, an acid) alone, but the case of adding an acid solution containing the compound represented by Formula (5) (for example, an acid) is also included. Similarly, adding the organic amine compound is not limited to the case of adding the organic amine compound alone, but the case of adding an amine solution containing the organic amine compound is also included.

Above all, from the viewpoint of producing the organic amine salt with high efficiency, a method of adding the compound represented by Formula (5) (for example, an acid) to an amine solution containing the organic amine compound is preferred.

Examples of the solvent for the amine solution include methanol, ethanol, acetonitrile, and 2-propanol. Regarding the solvent for the amine solution, one kind may be used, or two or more kinds thereof may be used. Among them, the solvent for the amine solution is preferably at least one selected from methanol, ethanol, and acetonitrile.

The concentration of the organic amine compound in the amine solution is preferably 5 mass% to 50 mass%, and more preferably 5 mass% to 20 mass%, with respect to the total amount of the amine solution.

The amine solution can be produced using, for example, a general synthesis method of synthesizing a compound having an aminopyrazole skeleton, such as a cyclization reaction between an acrylonitrile compound and a hydrazine compound (for example, the reaction described in paragraphs 0023 and 0024 of JP2006-515282A).

Examples of the solvent for the acid solution include water, methanol, and 2-propanol. Regarding the solvent for the acid solution, one kind may be used, or two or more kinds thereof may be used. Among them, the solvent for the acid solution is preferably water or methanol.

The concentration of the compound represented by Formula (5) (for example, an acid) in the acid solution is preferably 50 mass% to 100 mass%, more preferably 70 mass% to 95 mass%, and particularly preferably 80 mass% to 90 mass%, with respect to the total amount of the acid solution.

The reaction temperature employed when the organic amine compound represented by Formula (2) and the compound represented by Formula (5) are subjected to a neutralization reaction, is preferably 0°C to 35°C.

### - (B) Azo compound production step -

In the azo compound production step according to an embodiment of the invention, a compound represented by Formula (1) is reacted with the diazonium salt produced by the diazotization reaction step, and thereby an azo compound represented by Formula (3) is produced. As described above, in a case in which a diazotization reaction is performed using a salt of an organic amine compound (that is, organic amine salt) obtained via the organic amine salt production step, a compound represented by Formula (1) is reacted with a diazonium salt produced from the organic amine salt, and thereby an azo compound represented by Formula (3) is produced.

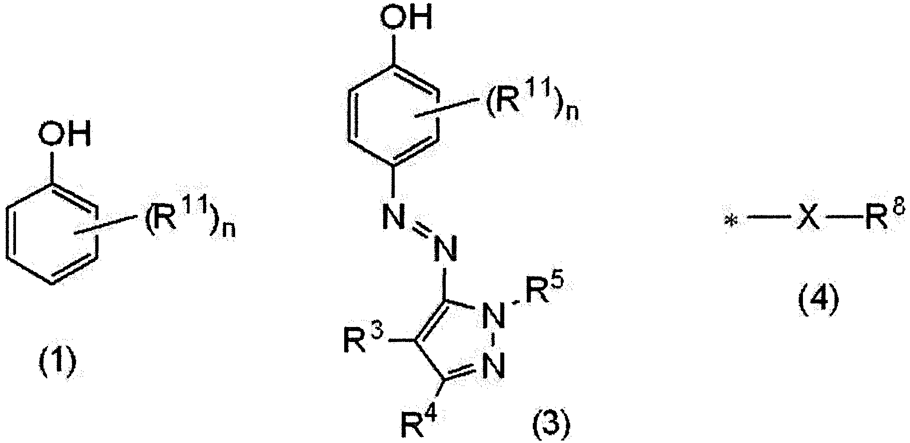

In regard to Formula (1) and Formula (3), R¹¹ represents a halogen atom, an alkyl group, or an alkoxy group. n represents an integer from 0 to 4.

In regard to Formula (3), R³ and R⁴ each independently represent a hydrogen atom, an alkyl group, an alkenyl group, an alkynyl group, an aromatic group, a heterocyclic group, a halogen atom, or a group represented by Formula (4); and R⁵ represents a hydrogen atom, an alkyl group, an alkenyl group, an alkynyl group, an aromatic group, or a heterocyclic group.

Furthermore, in regard to Formula (4), X represents an oxygen atom or a sulfur atom; and R⁸ represents a hydrogen atom, an alkyl group, an alkenyl group, an alkynyl group, an aromatic group, or a heterocyclic group. The symbol * represents a position of bonding.

The halogen atom for R¹¹ in Formula (1) and Formula (3) has the same meaning as the halogen atom for R³ and R⁴ in Formula (2). The alkyl group for R¹¹ in Formula (1) and Formula (3) has the same meaning as the alkyl group for R⁵ in Formula (2), and a preferred range thereof is also the same. Furthermore, examples of the alkoxy group for R¹¹ in Formula (1) and Formula (3) include a methoxy group, an ethoxy group, a propoxy group, an isopropoxy group, a pentyloxy group, a phenoxy group, a cyclohexyloxy group, and an allyloxy group.

In regard to Formula (1) and Formula (3), n is preferably 0, 1, or 2; more preferably 0 or 1; and even more preferably 1.

In regard to Formula (1) and Formula (3), the case in which n = 0 (that is, in a case in which the compound represented by Formula (1) is phenol), and the case in which n ≥ 1, and R¹¹ represents a halogen atom or an alkyl group substituted with a halogen atom, are preferred; the case in which n ≥ 1, and R¹¹ represents a halogen atom or an alkyl group substituted with a halogen atom, is more preferred; the case in which n ≥ 1, and R¹¹ represents a fluorine atom, a chlorine atom, a bromine atom, or a trifluoromethyl group, is even more preferred; the case in which n ≥ 1, and R¹¹ represents a fluorine atom or a chlorine atom, is still more preferred; and the case in which n ≥ 1, and R¹¹ represents a chlorine atom, is particularly preferred.

Regarding R¹¹, it is preferable that at least one of them is bonded to the ortho-position with respect to the hydroxyl group bonded to the benzene ring, and it is preferable that a halogen atom (particularly a chlorine atom) is bonded to the ortho-position with respect to the hydroxyl group bonded to the benzene ring.

Specific examples of the compound represented by Formula (1) are shown below. However, according to an embodiment of the invention, the compound represented by Formula (1) is not limited to the following specific examples.

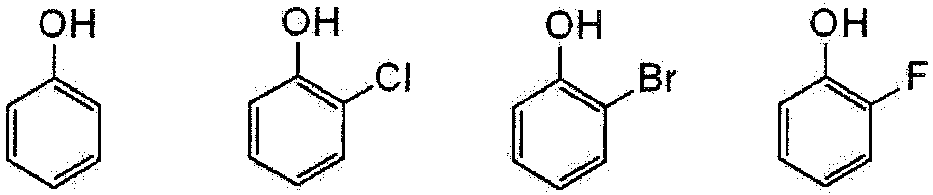

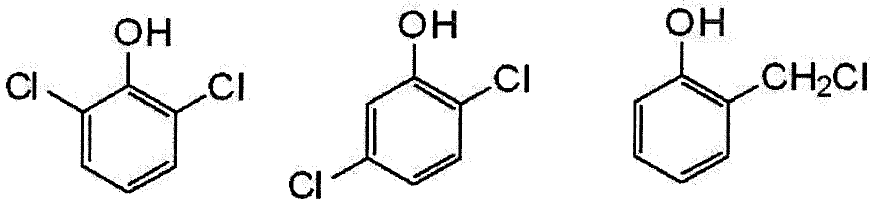

R³ to R⁵ in Formula (3) each independently have the same meanings as R³ to R⁵ in Formula (2), and preferred ranges thereof are also the same.

According to an embodiment of the invention, the case in which R¹¹ represents a halogen atom or n is 0, R¹ and R² each represent a hydrogen atom, R³ and R⁴ each independently represent a hydrogen atom or an alkyl group, and R⁵ represents an alkyl group, is preferred; and the case in which R¹¹ represents a halogen atom or n is 0, R¹, R², R³, and R⁴ each represent a hydrogen atom, and R⁵ represents an alkyl group, is more preferred.

Specific examples of the azo compound represented by Formula (3) (Example Compounds (1) to (12)) are shown below. However, according to an embodiment of the invention, the azo coloring agent represented by Formula (3) is not limited to the following specific examples.

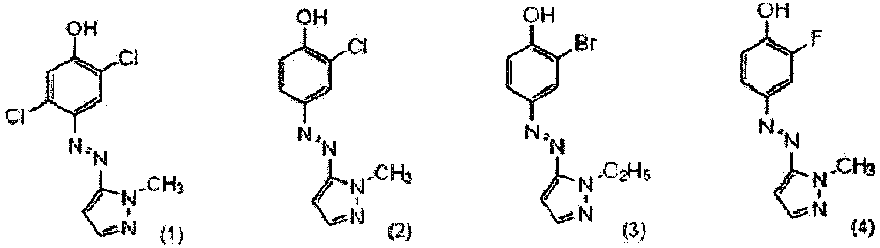

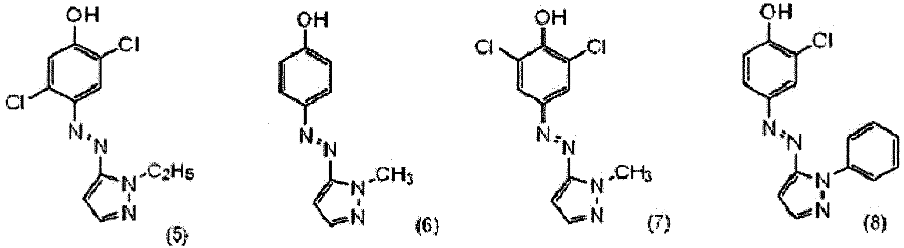

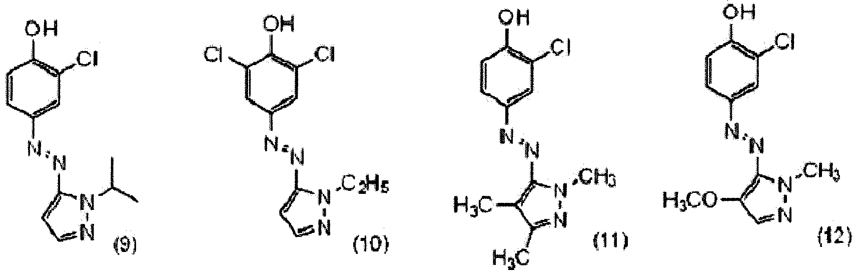

In regard to the azo compound production step, the amount of use of the compound represented by Formula (1) is preferably 0.8 times or more, more preferably 1.1 times or more, and particularly preferably 1.2 times or more, the molar amount of use of the organic amine compound represented by Formula (2) or a salt thereof. When the amount of use of the compound represented by Formula (1) is 0.8 times or more (particularly, 1.1 times or more) the molar amount of the organic amine compound, the yield of the azo coloring agent is further enhanced. The amount of use of the compound represented by Formula (1) can be adjusted to, for example, 3.0 times or less the molar amount, and the amount of use is preferably 2.5 times or less, and more preferably 2.0 times or less, the molar amount of the organic amine compound.

The reaction temperature for the reaction between the compound represented by Formula (1) and the diazonium salt is preferably in the range of -5°C to 10°C, and more preferably in the range of -5°C to 5°C.

Furthermore, the reaction time for the reaction between the compound represented by Formula (1) and the diazonium salt is preferably in the range of 0.5 hours to 4.0 hours, more preferably in the range of 0.5 hours to 3.0 hours, and particularly preferably in the range of 1.0 hour to 3.0 hours.

After the compound represented by Formula (1) and the diazonium salt are reacted, an azo compound is precipitated out by a known method such as a method of sequentially adding a mixed solvent of water and methanol, and an aqueous solution of sodium acetate, to the reaction liquid containing the azo compound produced by the reaction. Then, the azo compound can be preparatively separated from the reaction liquid.

### EXAMPLES

Hereinafter, embodiments of the invention will be more specifically described by way of Examples. However, the embodiments of the invention are not intended to be limited to the following Examples as long as the gist is maintained. Unless particularly stated otherwise, the "parts" is on a mass basis.

### (Example 1)

Example Compound (2), which is an azo compound [hereinafter, referred to as Compound (2)], was synthesized by the scheme illustrated below.

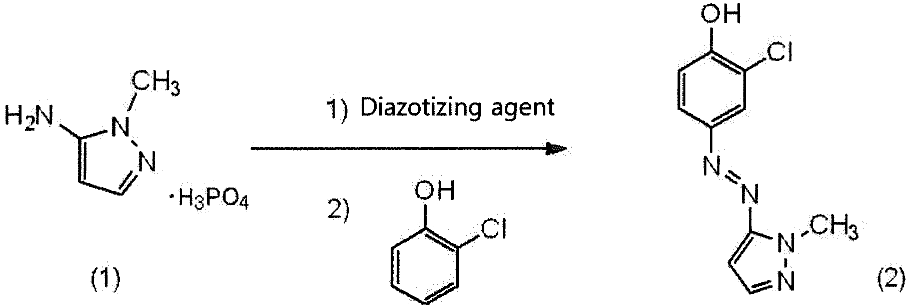

### - A. Synthesis of organic amine salt -

First, an organic amine salt (1) was synthesized as illustrated in the following scheme.

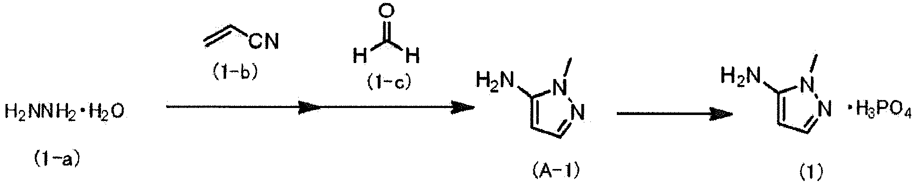

### (1) Preparation of organic amine compound (A-l)-containing solution

50 g (1.0 mol) of Compound (1-a) was dissolved in 40 mL of ethanol, and the solution thus obtained was cooled to 0°C. While the cooled solution was stirred, 53 g (1.0 mol) of Compound (1-b) was added dropwise to the solution, and then the resulting mixture was stirred for one hour. After completion of stirring, the solution thus obtained was left to cool naturally, and then 250 mL of ethanol and 2.5 g of sodium hydrogen carbonate were added to the solution. 31 g (1.0 mol) of Compound (1-c) was further added thereto. The solution thus obtained was heated to an internal temperature of 45°C, and the solution was stirred for 30 minutes. The solution obtained after stirring for 30 minutes was cooled to 0°C. Next, 3 g of sodium ethoxide (NaOEt) was added to the cooled solution. The solution thus obtained was heated to an internal temperature of 85°C, and was stirred for 3 hours. Subsequently, the solution was left to cool naturally.

In this manner, a solution containing an organic amine compound (A-1) (organic amine compound (A-1)-containing solution) was obtained.

### (2) Synthesis of organic amine salt (1)

700 mL of methanol was added to the organic amine compound (A-1)-containing solution. While the solution thus obtained was stirred at an internal temperature of 5°C, 120 g of a 85 mass% aqueous solution of phosphoric acid (H₃PO₄) (1.0 mol as the amount of H₃PO₄) was added dropwise to the solution. As a result of the dropwise addition, crystals were precipitated out. The crystals thus precipitated were collected by filtration, and 111 g of crystals of the organic amine salt (1) (pale yellow or white crystals) were obtained (yield 57%).

The yield is a yield based on the amount of the raw material compound (1-a).

The structure of the organic amine salt (1) was checked by NMR and ion chromatography.

As a result, it was confirmed that the organic amine salt (1) was a compound in which the molar ratio (trivalent cation:trivalent anion) between the trivalent cation derived from the organic amine compound (A-1) and the trivalent anion derived from phosphoric acid was 1:1.

### - B. Synthesis of azo compound -

### (1) Diazotization reaction step

To a mixed liquid obtained by mixing 180 g of acetic acid and 20 g of concentrated sulfuric acid, 140 g of nitrosylsulfuric acid was added in divided portions at a temperature of the mixed liquid of 25°C. The reaction mixed liquid thus obtained was cooled to a temperature of 10°C or lower, and 80 g of the organic amine salt (1) was added thereto in divided portions while the temperature of the reaction mixed liquid was maintained at a temperature of 25°C or lower. After the addition, this reaction mixed liquid was stirred for 30 minutes at a temperature of 25°C or lower so as to obtain a diazonium salt, and then 4 g of urea was added thereto. The mixture was further stirred for 30 minutes, and thereby excess nitrosylsulfuric acid was deactivated.

In this manner, a mixture containing a diazonium salt of the organic amine salt (1) was prepared.

In the process described above, generation of NOₓ and effervescence of the reaction mixture were not observed.

### (2) Azo coloring agent production step

Next, a mixed liquid obtained by mixing 79 g of 2-chlorophenol and 340 mL of methanol was cooled to a temperature of 0°C or lower, and the mixture containing the diazonium salt was added dropwise to the mixed liquid, while the temperature of the mixed liquid was maintained at a temperature of 10°C or lower, to thereby induce a reaction. The reaction mixture thus obtained was stirred for 30 minutes at a temperature of 10°C or lower, and then, to this reaction mixture, 400 mL of water and an aqueous solution of sodium acetate (aqueous solution obtained by dissolving 220 g of sodium acetate in 550 mL of water) were slowly added in this order. Subsequently, the reaction mixture was heated to a temperature of 60°C or higher, and was stirred for one hour or longer. Subsequently, the reaction mixture was cooled to a temperature of 30°C or lower. Crystals precipitated as a result of the cooling were collected by filtration and washed with water, and thereby crude crystals of Compound (2) were obtained.

In the process described above, since fluidity of the reaction medium was maintained at a satisfactory level, a coloring agent could be produced even though the amount of solvent was suppressed to a low level. Also, the color purity of the crude crystals was also excellent.

The purity (HPLC, area%) of the crude crystals of Compound (2) herein was 99.3%.

Subsequently, the crude crystals thus obtained were added to a mixed solvent including 900 mL of methanol, 50 g of triethylamine, and 300 mL of water, and the mixture was stirred at a temperature of 50°C or higher. To the solution thus obtained by stirring, a mixed liquid of 22 g of concentrated sulfuric acid and 90 mL of water was added dropwise thereto, and the mixture was cooled to a temperature of 25°C or lower. Crystals precipitated by the cooling were collected by filtration, and were washed using water and methanol in this order, followed by drying. Thus, 86.4 g of Compound (2) was obtained (yield 87.0%).

The purity (HPLC, area%) of the Compound (2) finally obtained was 99.9%.

### (Comparative Example 1)

### - A. Synthesis of organic amine salt -

An organic amine salt (1) was synthesized in the same manner as in Example 1. Next, an azo coloring agent was synthesized as described below.

### - B. Synthesis of azo compound -

To a mixed liquid obtained by mixing 30 g of acetic acid and 400 g of concentrated sulfuric acid, 70 g of sodium nitrite was added thereto in divided portions at a temperature of the mixed liquid of 15°C or lower, and the mixture was allowed to react. The reaction mixture thus obtained was stirred for 2 hours at 70°C, and then was cooled to a temperature of 10°C or lower. While the reaction mixture was maintained at a temperature of 10°C or lower, a mixed solution obtained by mixing 195 g of the organic amine salt (1), 50 g of phosphoric acid, 50 g of propionic acid, and 50 g of acetic acid was added dropwise to the reaction mixture. After the dropwise addition, the reaction mixture was stirred for 30 minutes at a temperature of 15°C or lower. While the reaction mixture was stirred, generation of NOₓ and effervescence of the reaction mixture occurred noticeably. Next, 9 g of urea was added to the stirred reaction mixture, and the mixture was further stirred for 30 minutes. In this manner, a mixture containing a diazonium salt of the organic amine salt (1) was prepared.

Next, a mixed liquid obtained by mixing 154 g of 2-chlorophenol and 300 mL of methanol was cooled to a temperature of 0°C or lower, and the mixture containing the diazonium salt was added in divided portions to the mixed liquid, while the temperature of the mixed liquid was maintained at a temperature of 10°C or lower, so as to induce a reaction. The reaction mixture thus obtained was stirred for 2 hours at a temperature of 10°C or lower, and then, to this reaction mixture, 1,000 mL of water, 1,000 mL of methanol, 2,000 mL of water, and an aqueous solution of sodium acetate (aqueous solution obtained by dissolving 500 g of sodium acetate in 2,000 mL of water) were added slowly in this order. Subsequently, the reaction mixture was stirred for one hour or longer at 25°C, and then was cooled to a temperature of 30°C or lower. Crystals precipitated by the cooling were collected by filtration and washed with water, and thereby, crude crystals of Compound (2) were obtained.

In the process described above, fluidity of the reaction medium was maintained by regulating the amount of the solvent.

The purity (HPLC, area%) of the crude crystals of Compound (2) was 93.3%.

Subsequently, the crude crystals thus obtained were added to a mixed solvent including 1,800 mL of methanol, 100 g of triethylamine, and 600 mL of water, and the resulting mixture was stirred at a temperature of 50°C or higher. To the solution thus obtained by stirring, a mixed liquid of 45 g of concentrated sulfuric acid and 180 mL of water was added dropwise, and the resulting mixture was cooled to a temperature of 25°C or lower. Crystals precipitated by the cooling were collected by filtration, and were washed using water and methanol in this order, followed by drying. Thus, 128 g of Compound (2) was obtained (yield 54.4%).

The purity (HPLC, area%) of the Compound (2) finally obtained was 97.1%.

The disclosure of JP2014-221674 is mentioned herein.

## Claims

1. A method for producing an azo compound, the method comprising:
subjecting an organic amine compound represented by the following Formula (2) or a salt thereof to a diazotization reaction in the presence of nitrosylsulfuric acid, and thereby producing a diazonium salt; and
reacting a compound represented by the following Formula (1) with the diazonium salt, and thereby producing an azo compound represented by the following Formula (3), 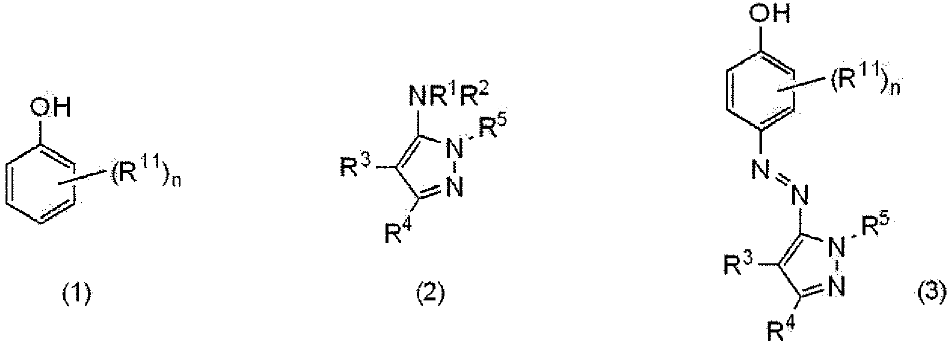
in Formulae (1) to (3), R¹¹ represents a halogen atom, an alkyl group, or an alkoxy group; R¹ and R² each represent a hydrogen atom; R³ and R⁴ each independently represent a hydrogen atom, an alkyl group, an alkenyl group, an alkynyl group, an aromatic group, a heterocyclic group, a halogen atom, or a group represented by the following Formula (4); R⁵ represents a hydrogen atom, an alkyl group, an alkenyl group, an alkynyl group, an aromatic group, or a heterocyclic group; and n represents an integer from 0 to 4, and
*-X-R⁸ (4)
in Formula (4), X represents an oxygen atom or a sulfur atom; R⁸ represents a hydrogen atom, an alkyl group, an alkenyl group, an alkynyl group, an aromatic group, or a heterocyclic group; and the symbol * represents a position of bonding.

2. The method for producing an azo compound according to claim 1, wherein the organic amine compound represented by Formula (2) is at least one selected from the group consisting of the following compounds (A-1) to (A-6):

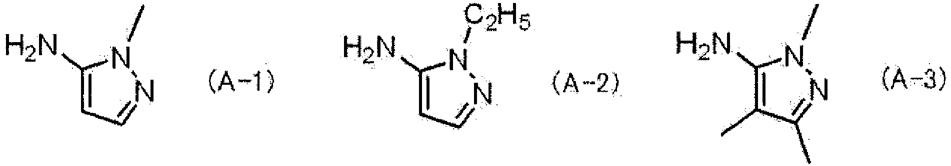

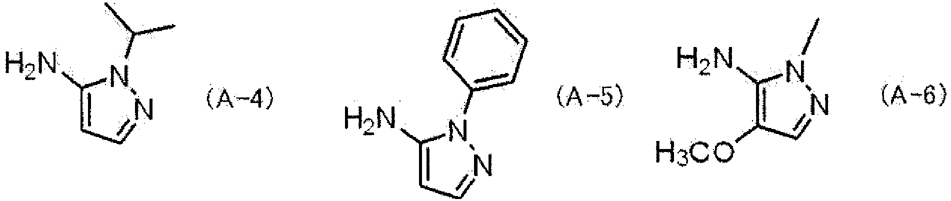

3. The method for producing an azo compound according to claim 1 or 2, the method further comprising:
subjecting the organic amine compound represented by Formula (2) and a compound represented by the following Formula (5) to a neutralization reaction, and thereby producing an organic amine salt,
wherein in the production of the diazonium salt, the organic amine salt is subjected to a diazotization reaction to produce a diazonium salt, and
in the production of the azo compound, the compound represented by Formula (1) is reacted with the diazonium salt produced from the organic amine salt, 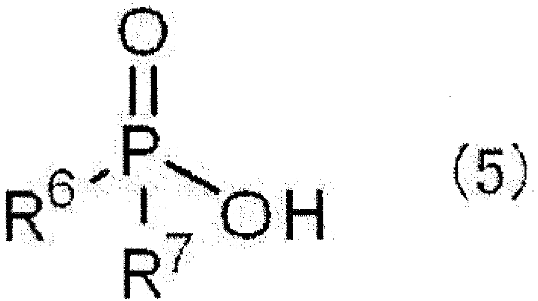
in Formula (5), R⁶ and R⁷ each independently represent a hydrogen atom, an alkyl group, an aromatic group, a heterocyclic group, or a hydroxyl group.

4. The method for producing an azo compound according to claim 3, wherein in the production of the organic amine salt, the compound represented by Formula (5) is added to an amine solution containing the organic amine compound represented by Formula (2), and thereby the organic amine compound represented by Formula (2) and the compound represented by Formula (5) are subjected to a neutralization reaction.

5. The method for producing an azo compound according to claim 3 or 4, wherein the compound represented by Formula (5) is phosphoric acid.

6. The method for producing an azo compound according to any one of claims 1 to 5, wherein R¹¹ represents a halogen atom or n is 0; R¹ and R² each represent a hydrogen atom; R³ and R⁴ each independently represent a hydrogen atom or an alkyl group; and R⁵ represents an alkyl group.

7. The method for producing an azo compound according to any one of claims 1 to 6, wherein R¹¹ represents a halogen atom or n is 0; R¹, R², R³ and R⁴ each represent a hydrogen atom; and R⁵ represents an alkyl group.

## Patentansprüche

1. Verfahren zur Herstellung einer Azoverbindung, wobei das Verfahren umfasst:
Diazotieren einer organischen Aminverbindung der folgenden Formel (2) oder eines Salzes davon in Gegenwart von Nitrosylschwefelsäure, wodurch ein Diazoniumsalz hergestellt wird; und
Umsetzen einer Verbindung der folgenden Formel (1) mit dem Diazoniumsalz, wodurch eine Azoverbindung der folgenden Formel (3) hergestellt wird, 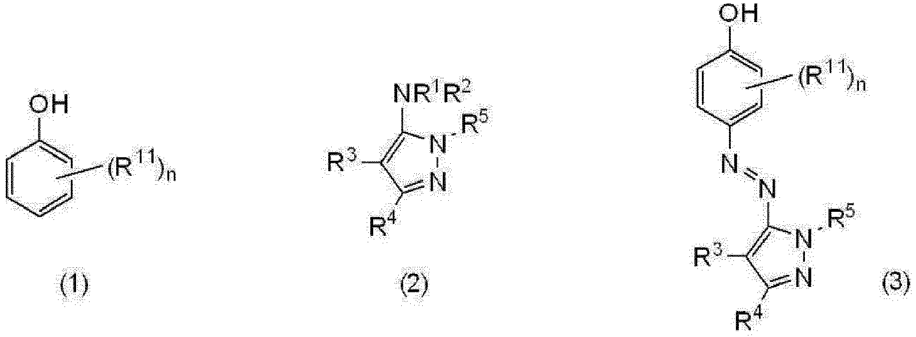
in den Formeln (1) bis (3) steht R¹¹ für ein Halogenatom, eine Alkylgruppe oder eine Alkoxygruppe; R¹ und R² stehen jeweils für ein Wasserstoffatom; R³ und R⁴ stehen jeweils unabhängig voneinander für ein Wasserstoffatom, eine Alkylgruppe, eine Alkenylgruppe, eine Alkinylgruppe, eine aromatische Gruppe, eine heterocyclische Gruppe, ein Halogenatom oder eine Gruppe der folgenden Formel (4); R⁵ steht für ein Wasserstoffatom, eine Alkylgruppe, eine Alkenylgruppe, eine Alkinylgruppe, eine aromatische Gruppe oder eine heterocyclische Gruppe; und n steht für eine ganze Zahl von 0 bis 4, und
*-X-R⁸ (4)
in der Formel (4) steht X für ein Sauerstoffatom oder ein Schwefelatom; R⁸ steht für ein Wasserstoffatom, eine Alkylgruppe, eine Alkenylgruppe, eine Alkinylgruppe, eine aromatische Gruppe oder eine heterocyclische Gruppe; und das Symbol * steht für eine Bindungsstelle.

2. Verfahren zur Herstellung einer Azoverbindung gemäß Anspruch 1, wobei die organische Aminverbindung der Formel (2) mindestens eine Verbindung ist, die ausgewählt ist aus der Gruppe, die aus den folgenden Verbindungen (A-1) bis (A-6) besteht:

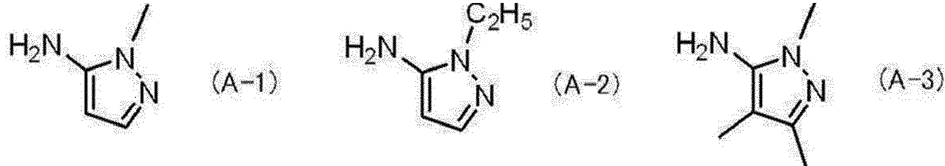

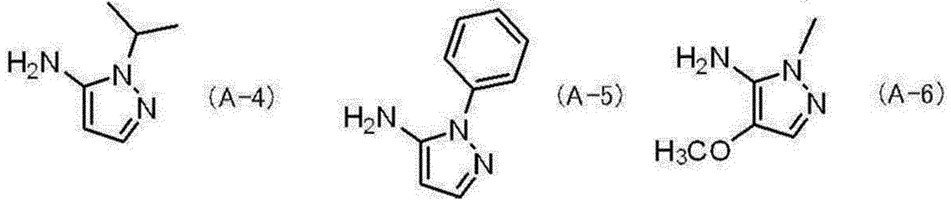

3. Verfahren zur Herstellung einer Azoverbindung gemäß Anspruch 1 oder 2, wobei das Verfahren ferner umfasst:
Neutralisieren der organischen Aminverbindung der Formel (2) und einer Verbindung der folgenden Formel (5), wodurch ein organisches Aminsalz hergestellt wird,
wobei bei der Herstellung des Diazoniumsalzes das organische Aminsalz diazotiert wird, um ein Diazoniumsalz herzustellen, und
bei der Herstellung der Azoverbindung die Verbindung der Formel (1) mit dem aus dem organischen Aminsalz hergestellten Diazoniumsalz umgesetzt wird, 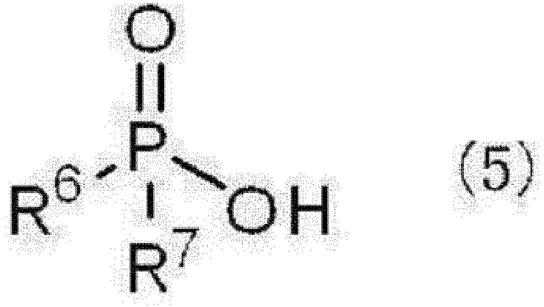
in der Formel (5) stehen R⁶ und R⁷ jeweils unabhängig voneinander für ein Wasserstoffatom, eine Alkylgruppe, eine aromatische Gruppe, eine heterocyclische Gruppe oder eine Hydroxylgruppe.

4. Verfahren zur Herstellung einer Azoverbindung gemäß Anspruch 3, wobei bei der Herstellung des organischen Aminsalzes die Verbindung der Formel (5) zu einer Aminlösung gegeben wird, die die organische Aminverbindung der Formel (2) enthält, wodurch die organische Aminverbindung der Formel (2) und die Verbindung der Formel (5) neutralisiert werden.

5. Verfahren zur Herstellung einer Azoverbindung gemäß Anspruch 3 oder 4, wobei die Verbindung der Formel (5) Phosphorsäure ist.

6. Verfahren zur Herstellung einer Azoverbindung gemäß einem der Ansprüche 1 bis 5, wobei R¹¹ für ein Halogenatom steht oder n 0 ist; R¹ und R² jeweils für ein Wasserstoffatom stehen; R³ und R⁴ jeweils unabhängig voneinander für ein Wasserstoffatom oder eine Alkylgruppe stehen; und R⁵ für eine Alkylgruppe steht.

7. Verfahren zur Herstellung einer Azoverbindung gemäß einem der Ansprüche 1 bis 6, wobei R¹¹ für ein Halogenatom steht oder n 0 ist; R¹, R², R³ und R⁴ jeweils für ein Wasserstoffatom stehen; und R⁵ für eine Alkylgruppe steht.

## Revendications

1. Procédé pour produire un composé azoïque, le procédé comprenant les étapes consistant à :
soumettre un composé d'amine organique représenté par la formule (2) suivante ou un sel de celui-ci à une réaction de diazotation en présence d'acide nitrosylsulfurique, et produire ainsi un sel de diazonium ; et
faire réagir un composé représenté par la formule (1) suivante avec le sel de diazonium, et produire ainsi un composé azoïque représenté par la formule (3) suivante, 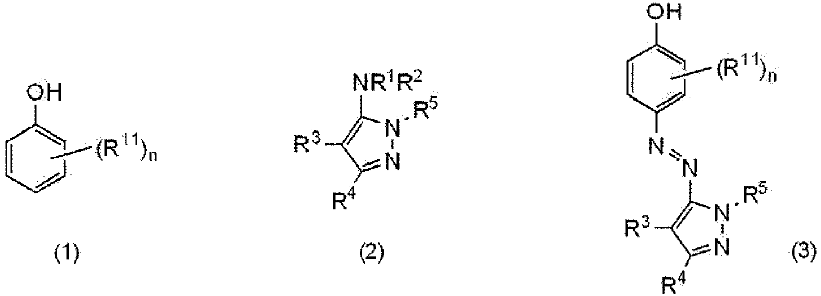
dans les formules (1) à (3), R¹¹ représente un atome d'halogène, un groupe alkyle ou un groupe alcoxy ; R¹ et R² représentent chacun un atome d'hydrogène; R³ et R⁴ représentent chacun indépendamment un atome d'hydrogène, un groupe alkyle, un groupe alcényle, un groupe alcynyle, un groupe aromatique, un groupe hétérocyclique, un atome d'halogène ou un groupe représenté par la formule (4) suivante ; R⁵ représente un atome d'hydrogène, un groupe alkyle, un groupe alcényle, un groupe alcynyle, un groupe aromatique ou un groupe hétérocyclique ; et n représente un entier de 0 à 4, et
*-X-R⁸ (4)
dans la formule (4), X représente un atome d'oxygène ou un atome de soufre ; R⁸ représente un atome d'hydrogène, un groupe alkyle, un groupe alcényle, un groupe alcynyle, un groupe aromatique ou un groupe hétérocyclique ; et le symbole * représente une position de liaison.

2. Procédé pour produire un composé azoïque selon la revendication 1, dans lequel le composé d'amine organique représenté par la formule (2) est au moins un sélectionné à partir du groupe constitué par les composés (A-1) à (A-6) suivants :

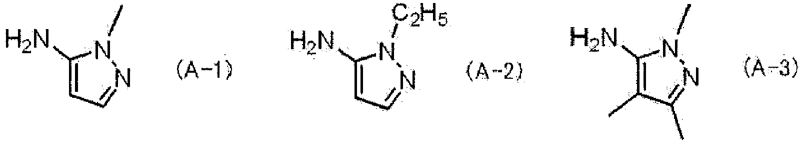

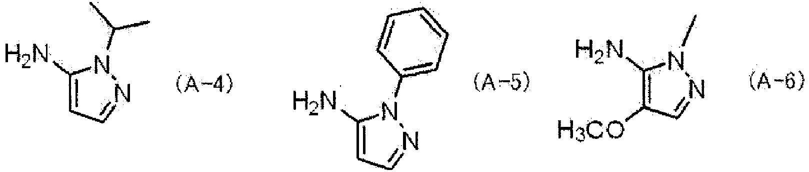

3. Procédé pour produire un composé azoïque selon la revendication 1 ou 2, le procédé comprenant en outre les étapes consistant à :
soumettre le composé d'amine organique représenté par la formule (2) et un composé représenté par la formule (5) suivante à une réaction de neutralisation, et produire ainsi un sel d'amine organique,
dans lequel dans la production du sel de diazonium, le sel d'amine organique est soumis à une réaction de diazotation pour produire un sel de diazonium, et
dans la production du composé azoïque, le composé représenté par la formule (1) est mis à réagir avec le sel de diazonium produit à partir du sel d'amine organique, 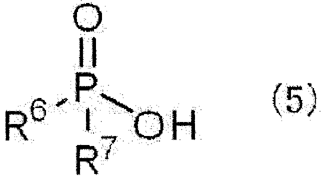
dans la formule (5), R⁶ et R⁷ représentent chacun indépendamment un atome d'hydrogène, un groupe alkyle, un groupe aromatique, un groupe hétérocyclique ou un groupe hydroxyle.

4. Procédé pour produire un composé azoïque selon la revendication 3, dans lequel dans la production du sel d'amine organique, le composé représenté par la formule (5) est ajouté à une solution d'amine contenant le composé d'amine organique représenté par la formule (2), et ainsi le composé d'amine organique représenté par la formule (2) et le composé représenté par la formule (5) sont soumis à une réaction de neutralisation.

5. Procédé pour produire un composé azoïque selon la revendication 3 ou 4, dans lequel le composé représenté par la formule (5) est l'acide phosphorique.

6. Procédé pour produire un composé azoïque selon l'une quelconque des revendications 1 à 5, dans lequel R¹¹ représente un atome d'halogène ou n est égal à 0 ; R¹ et R² représentent chacun un atome d'hydrogène ; R³ et R⁴ représentent chacun indépendamment un atome d'hydrogène ou un groupe alkyle ; et R⁵ représente un groupe alkyle.

7. Procédé pour produire un composé azoïque selon l'une quelconque des revendications 1 à 6, dans lequel R¹¹ représente un atome d'halogène ou n est égal à 0 ; R¹, R², R³ et R⁴ représentent chacun un atome d'hydrogène ; et R⁵ représente un groupe alkyle.
